# EUROPEAN PATENT SPECIFICATION

(11) **EP 4 620 665 B1**
(45) Date of publication and mention of the grant of the patent: **02.12.2026**
(21) Application number: 25164302.9
(22) Date of filing: 18.03.2025
(51) Int. Cl.: B31F 1/28, B32B 38/18

(54) **ALIGNMENT DEVICE AND METHOD FOR ALIGNING LAMINATING SHEETS IN A CORRUGATED CARDBOARD LAMINATOR**
AUSRICHTVORRICHTUNG UND VERFAHREN ZUM AUSRICHTEN VON KASCHIERBÖGEN IN EINEM WELLPAPPELAMINATOR
DISPOSITIF D'ALIGNEMENT ET PROCÉDÉ D'ALIGNEMENT DE FEUILLES DE STRATIFICATION DANS UNE MACHINE À LAMINER EN CARTON ONDULÉ

(30) Priority: 19.03.2024 IT 202400006022
(43) Date of publication of application: 24.09.2025
(73) Proprietor: FOSBER S.p.A., 55060 Pescaglia (LU) (IT)
(72) Inventor: VANNUCCHI, Lorenzo, 56122 Pisa (PI) (IT); IMPOSTI, Marco, 55012 Capannori (LU) (IT); PINNA, Francesco, 55100 Lucca (LU) (IT)
(74) Representative: Dragotti & Associati S.P.A.

(56) References cited:
- EP-A2- 0 733 467
- CN-A- 102 975 562
- CN-U- 217 455 494

## Description

The present invention relates to the sector for the production of laminated corrugated cardboard and in particular to a corrugated carboard laminator. The invention has been developed with particular regard to an alignment device for aligning laminating sheets and a method for aligning a laminating sheet.

In many industrial applications it is known to apply a laminating sheet, for example a sheet which has been printed and cut to size beforehand, onto a multilayer composite material, for example corrugated cardboard. One of the reasons for this choice lies in the fact that printing a sheet or using a printed sheet directly inside a corrugated cardboard plant is unable to achieve the required quality both because in-line printing does not ensure the same result as printing of a single sheet, and because the cardboard in the production plant is subject to environmental conditions, temperature and moisture, which may affect the characteristics of the laminated sheet.

For these and other reasons, the corrugated cardboard, in the form of a continuous web or separate sheets, is joined together with a laminating sheet at the end of the corrugated cardboard manufacturing process.

One of the main problems of this solution is to ensure that the laminating sheet is perfectly aligned, both along the sides and at the front, with the corrugated cardboard web or sheet, before being united with it. Otherwise, the laminating sheet could leave exposed portions of the cardboard which would have to be trimmed or discarded, but, in particular the image, writing or pattern present on the laminating sheet could be out-of-alignment with the cardboard itself.

Alignment devices which use translation members in order to modify the relative position of the laminated sheet, as for example in FR2857655, are known. In this solution, two movement members which are independent of each other move the laminating sheet until at least one side edge and the front edge of the sheet are aligned with at least one side edge and the front edge of the cardboard sheet or web. These solutions sometimes are not particularly precise and, in any case, they comprise necessarily also a series of sensors able to detect the various relative positions assumed by the laminating sheet during the alignment procedure, resulting in a particularly complex device.

Other devices of the known type, such as that described in EP0733467, comprise cutting blades which cut the cardboard web or sheet to size depending on the position of the front edge or rear edge of the laminating sheet and thus allow the alignment thereof. These solutions pose significant problems in terms of precision and, in any case, result in large amounts of carboard being discarded.

All the known solutions therefore have numerous drawbacks associated with the complex operation of the components used, such as the numerous sensors, the complexity of the alignment operations, such as the numerous displacements needed to achieve correct alignment, and the difficulty of maintaining a high laminating speed owing to the numerous operations which must be performed.

There therefore exists the need to provide an alignment device which overcomes or reduces substantially the aforementioned drawbacks.

This need is satisfied by the characteristic features of the invention illustrated in the independent claim. The dependent claims define preferred and/or particularly advantageous features of the invention.

It is understood that elements and characteristic features of one embodiment may be incorporated in other embodiments without further clarifications.

Reference will now be made in detail to the various embodiments of the invention, with particular reference to the attached figures, in which:
- Figure 1 shows a schematic layout of an end portion of a plant for the production of laminated corrugated cardboard;

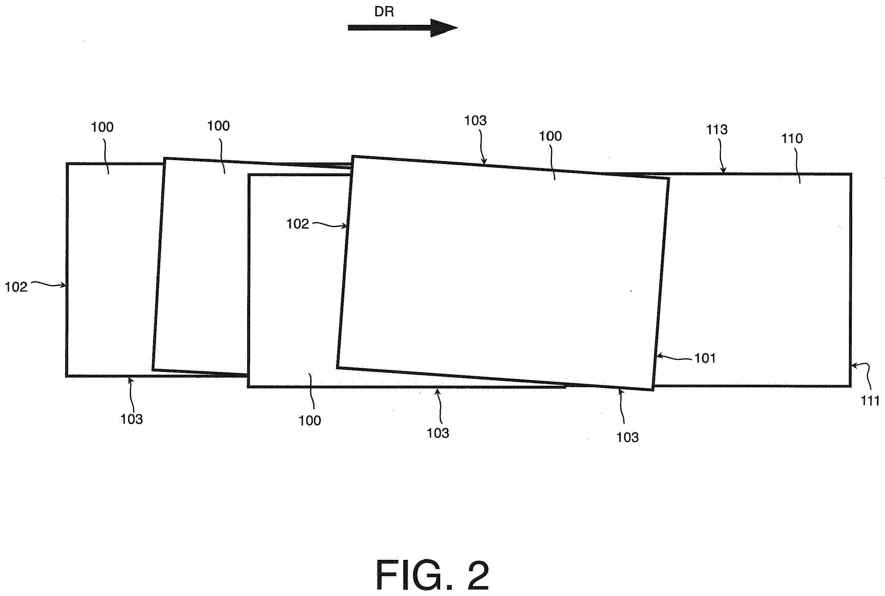

- Figure 2 is a schematic plan-view representation of a plurality of laminating sheets;
- Figure 3 shows a schematic side view of one of the embodiments of the alignment device according to the present invention;
- Figure 4 is a schematic side view of a first motorized transport unit of the device shown in Figure 3;
- Figure 6 is a further side view the device shown in Figure 3;

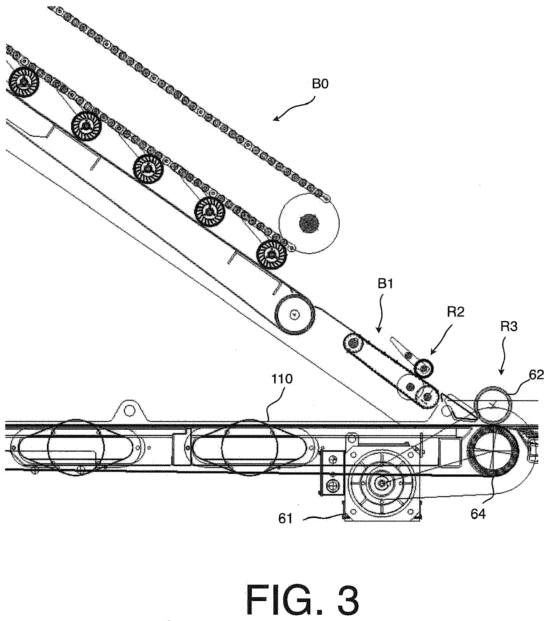

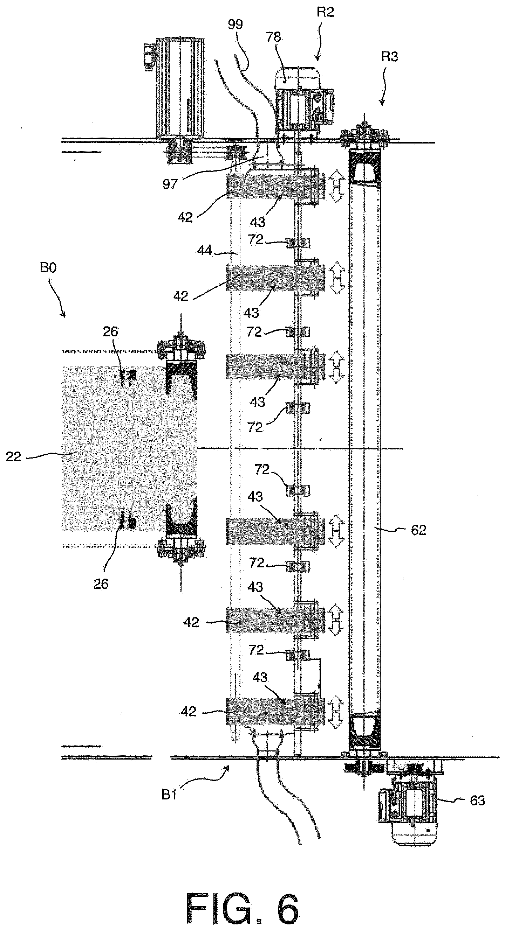

- Figure 6 is a view, from above, of the alignment device shown in Figure 3;

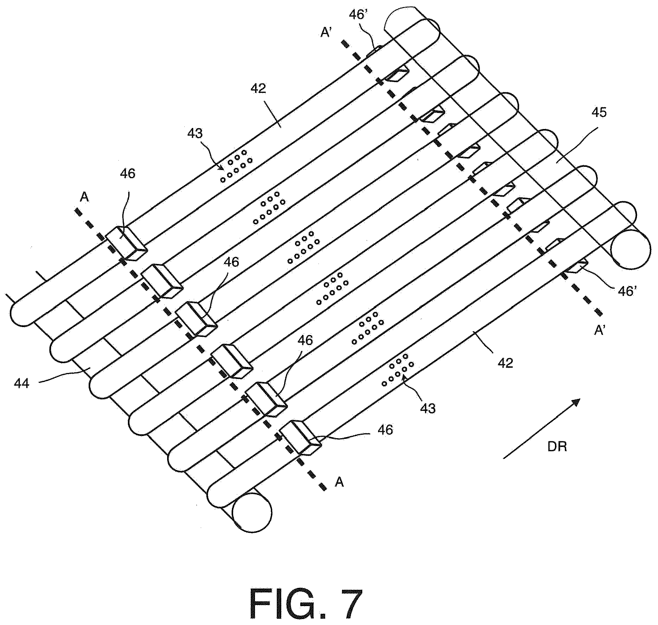

- Figure 7 is an axonometric view of a second motorized transport unit with a movable abutting element according to the present invention;
- Figure 7 is a schematic side view of Figure 7;

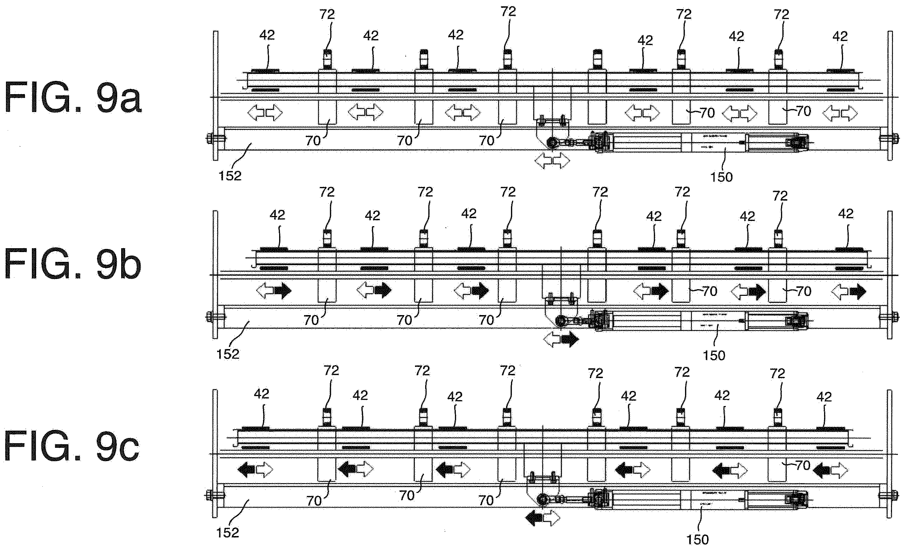

- Figures 9a, 9b and 9c are front views of the end portion of the second motorized transport unit in three different operating conditions;

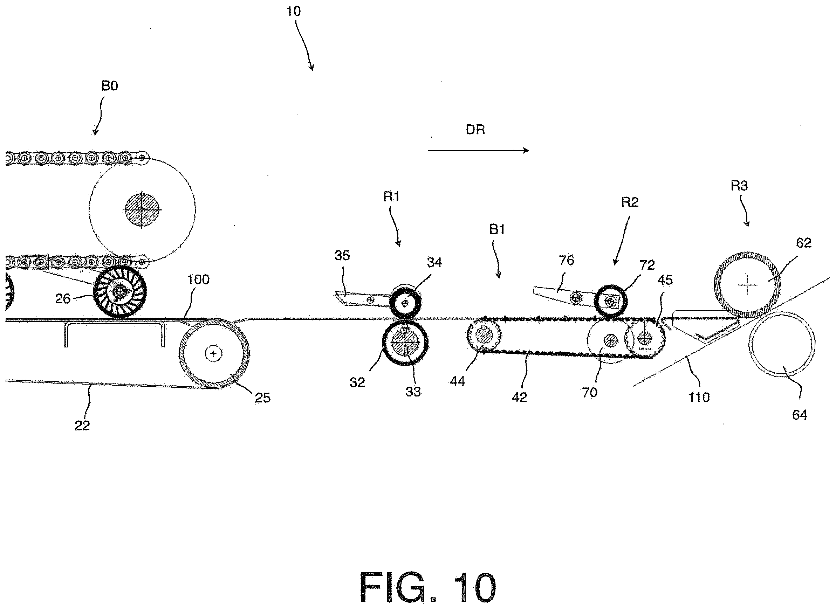

- Figure 10 is a schematic side view of another embodiment of the alignment device according to the present invention;

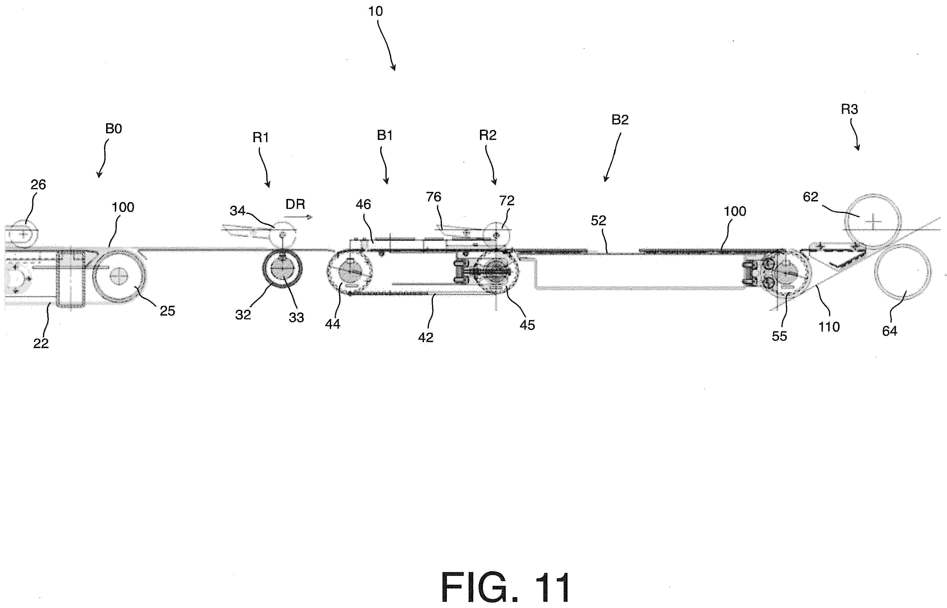

- Figure 11 is a schematic side view of a further embodiment of the alignment device according to the present invention;

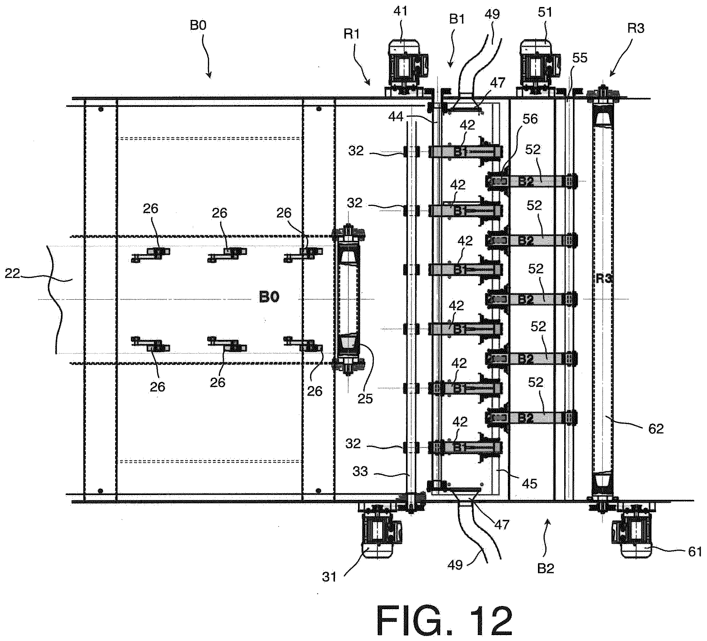

- Figure 12 is a view, from above, of the device shown in Figure 11;

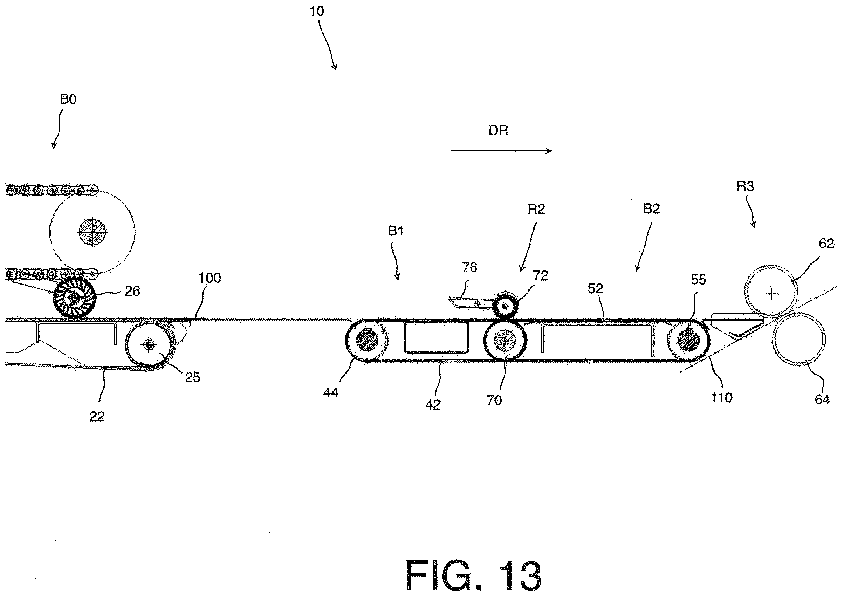

- Figure 13 is a schematic side view of one of the embodiments of the alignment device according to the present invention; and

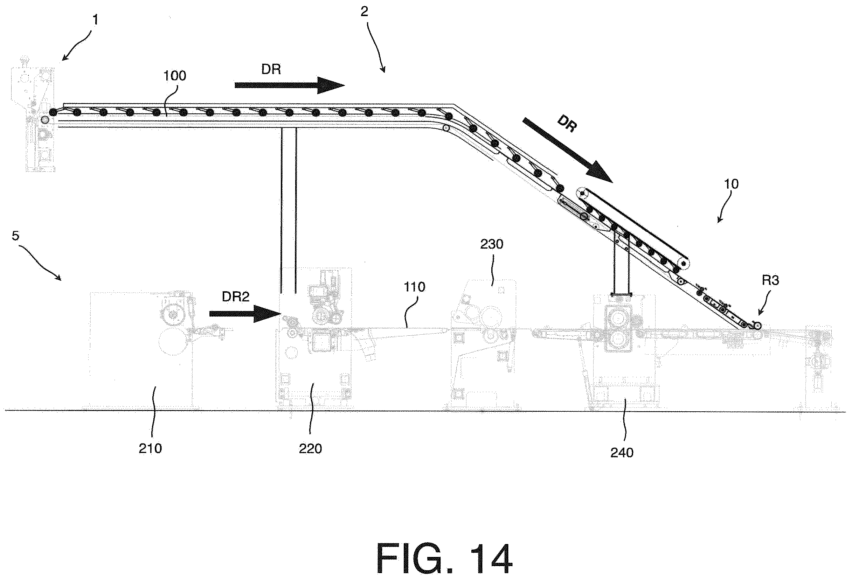

- Figure 14 is a schematic side view of a corrugated cardboard laminator comprising an alignment device according to the present invention.

Each example is provided merely by way of illustration of the invention and is understood as not being a limitation thereof. For example, the technical characteristics shown or described since they form part of one embodiment may be integrated within, or associated with, other embodiments in order to produce a further embodiment. It is understood that the present invention will be inclusive of these modifications and variants.

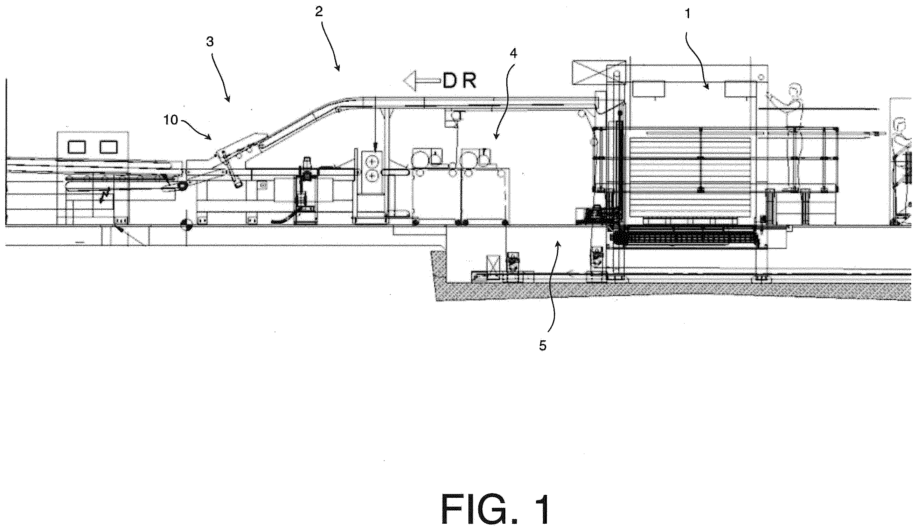

Figure 1 shows the layout of one of the possible embodiments of an end portion of a plant for the production of laminated corrugated cardboard comprising a corrugated cardboard laminator according to the present invention and in particular an alignment device for aligning laminating sheets.

In this plant section the following are present: a laminating sheet magazine 1, or sheet feeder, configured to store a plurality of laminating sheets 100, an inlet 5 for a web of multilayer composite cardboard, a zone 4 for depositing glue onto the web of multilayer composite cardboard 110, a zone 2 for transporting the laminating sheets 100 in a forward feeding direction DR**,** and a laminating zone 3 for joining the laminating sheets 100 to the multilayer composite cardboard 110.

Obviously, the incoming web of multilayer composite cardboard 110 may consist of a single flute, or single face, or a continuous composite cardboard sheet comprising a web of corrugated paper (wave) joined to a web of flat paper (liner). According to other embodiments, the incoming web of multilayer composite cardboard 110 may consist of a double flute, or double face, formed by two flutes glued together beforehand. Furthermore, the incoming multilayer composite cardboard may be a corrugated cardboard, with a single or double wave, namely a single flute or a double flute also comprising a liner.

In other possible embodiments at the inlet 5 a plurality of single sheets of multilayer composite cardboard sheets 110 with predetermined dimensions may be made available.

Each laminating sheet 100 comprises a front edge 101, a rear edge 102 and two side edges 103. In order to be able to obtain correct lamination 3 of the laminating sheet 100 together with the sheet, or web, of multilayer composite cardboard 110, in the lamination zone 3 the transport speed of the sheet, or web, of multilayer composite cardboard 110 and the speed of the laminating sheet 100 must be the same and at least the front edge 101 and at least one side edge 103 of the laminating sheet 100 must be perfectly aligned with a front edge 111 and a side edge of the sheet 113, or web, of multilayer composite cardboard 110.

The alignment device for aligning laminating sheets according to the present invention, generally denoted by 10, is arranged between the zone 2 for transporting the laminating sheets and the lamination zone 3 for joining the laminating sheets to the multilayer composite cardboard. The alignment device 10 defines a sliding/transport plane of the laminating sheet 100, which is transported in a forward feeding direction DR, corresponding substantially to a forward feeding path of the multilayer composite cardboard along the production plant.

The alignment device 10 according to the present invention comprises a first motorized transport unit B0 for transporting laminating sheets 100.

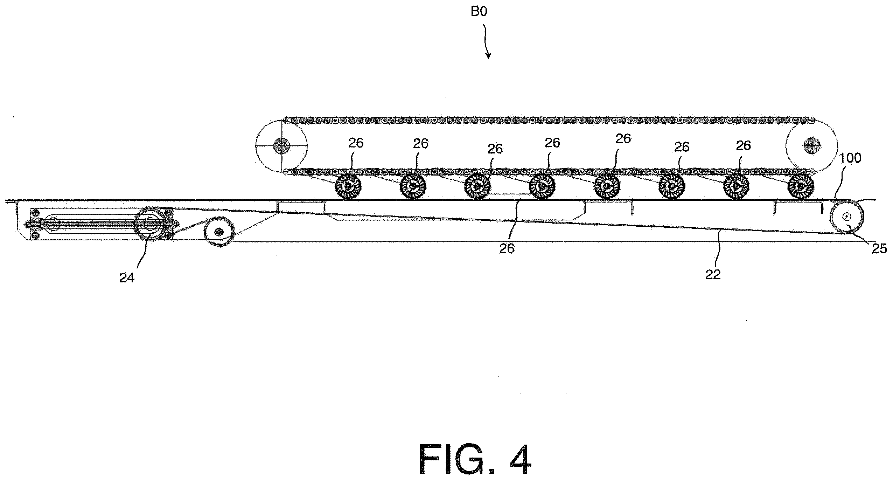

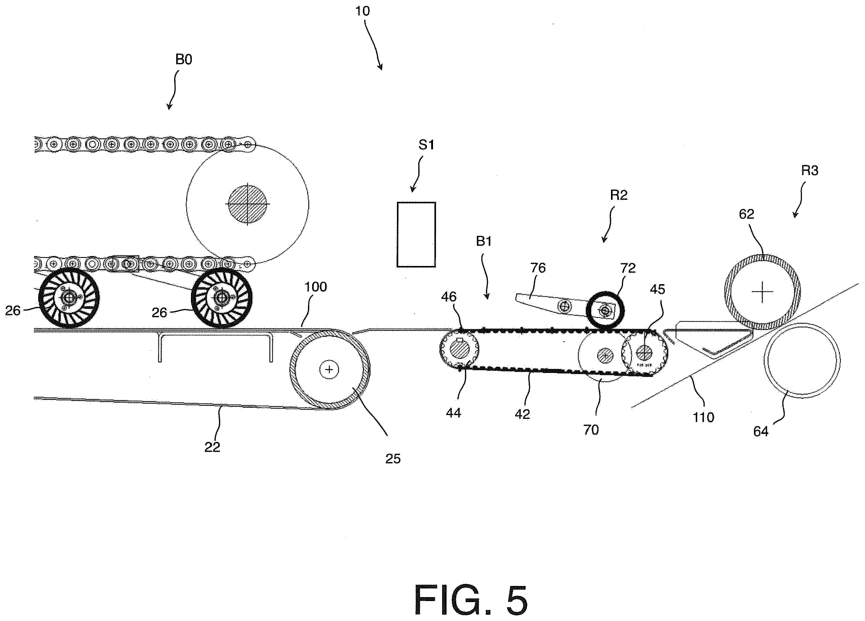

In the embodiment shown in Figure 4, the first motorized transport unit B0 comprises at least one belt 22 engaged with a first shaft 24 and a second shaft 25, and an independent actuator. Each of the shafts 24, 25 has an axis of rotation, and at least one of the shafts is connected to the actuator so as to rotate about its axis of rotation and move the belt 22 and allow transport of a laminating sheet 100 along a forward feeding direction DR. The belt 22 forms a sliding/transport plane of the laminating sheet 100.

The first motorized transport unit B0 may also comprise one or more pressure rollers 26 arranged above the belt 22 and designed to favour the transport and the positioning stability of the laminating sheet 100.

In other embodiments, the first motorized transport unit B0 comprises a belt with a plurality of through-openings, holes, and a suction system for favouring the transport and the positioning stability of the laminating sheet 100 on the belt itself.

The alignment device 10 comprises a second motorized transport unit B1 for alignment of the laminating sheet 100, arranged downstream of the first motorized transport unit B0 along the feeding path of the laminating sheet 100 in the forward feeding direction DR.

The second motorized transport unit B1 comprises at least one pair of belts 42, a pair of shafts 44, 45 on which the at least one pair of belts 42 is mounted, and an independent actuator 41 connected to at least one of the pair of shafts 44, 45. Each belt 42 has a predetermined perimetral development lengthwise and a width such that the sum of the widths of the belts 42 allows the formation of a sliding/transport plane of the laminating sheet 100.

Each of the shafts 44, 45 has an axis of rotation, and at least one of the shafts 44 is connected to the actuator 41 so as to rotate about its axis of rotation and move the at least one pair of belts 42 and allow transport of laminating sheet 100 along a forward feeding direction DR.

According to the embodiment shown in Figures 6 and 7, the second motorized transport unit B1 comprises six belts 42 mounted on the pair of shafts 44, 45 and arranged distributed uniformly along the length of the shafts 44, 45. In other embodiments, the number, the width and the distribution of the belts 42 may vary greatly from that shown in Figures 6 and 7, provided that the belts 42 are able to form a sliding/transport plane of the laminating sheet 100. For example, it is possible to envisage only three belts 42 with a greater width, or twelve belts with a smaller width, always arranged distributed uniformly along the length of the shafts 44, 45.

The second motorized transport unit B1 comprises at least one movable abutting element 46 engaged with each of the belts 42. Each movable abutting element 46 comprises at least one abutting wall 47 which is elongated along a longitudinal direction. Each movable abutting element 46 is arranged on a respective belt 42 so that the abutting wall 47 is arranged transverse to the extension of the belt 42, i.e. arranged transverse to the longitudinal axis coinciding with the forward feeding direction DR.

With particular reference to Figure 7, and as will emerge more clearly below, when the abutting elements 456 are aligned with each other along a longitudinal axis A-A, the plurality of longitudinally elongated walls 47 defines a plane of alignment of a laminating sheet, orthogonal to sliding/transport plane of the laminating sheet 100. Said alignment plane must be necessarily parallel to a plane orthogonal to the sheet, or web, of multilayer composite cardboard 110 passing along the front edge 111 of the sheet, or web, of multilayer composite cardboard 110.

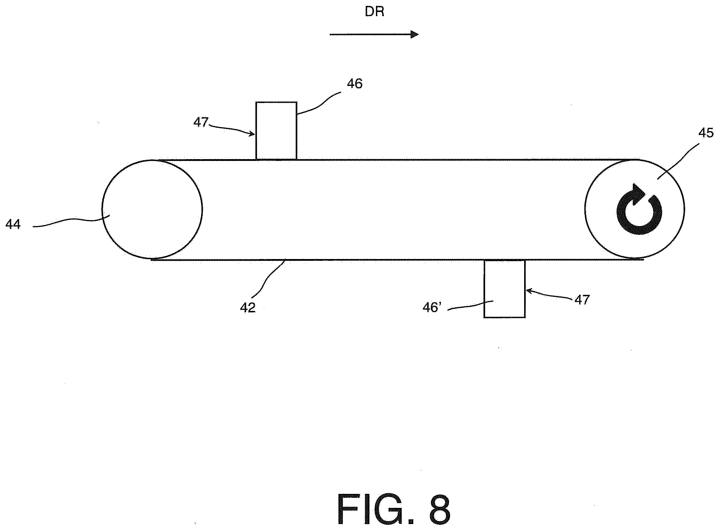

According to the embodiment shown in Figure 8, the second motorized transport unit B1 comprises at least one second movable abutting element 46'. Each movable abutting element 46' also comprises at least one abutting wall 47 which is elongated along a longitudinal direction. Each movable abutting element 46' is arranged on a respective belt 42 so that the abutting wall 47 is arranged transverse to the extension of the belt 42, i.e. arranged transverse to the longitudinal axis coinciding with the forward feeding direction DR. In this case also, when the abutting elements 46' are aligned with each other along a longitudinal axis A'-A', the plurality of longitudinally elongated walls 47 defines a plane of alignment of a laminating sheet, orthogonal to the sliding/transport plane of the laminating sheet 100.

According to a particularly advantageous characteristic feature, each movable abutting element 46', in each belt 42, is arranged equidistant from the first movable abutting element 46 with respect to the perimetral extension of the belt 42. Owing to this configuration, during use, when the first group of movable abutting elements 46, following rotation of the belts 42, after enabling alignment of a first laminating sheet 100, passes below the sliding/transport plane of the laminating sheet 100, the second group of movable abutting elements 46' moves up onto the sliding/transport plane of the laminating sheet 100 in order to align the next laminating sheet 100.

Again in accordance with this embodiment, the second motorized transport unit B1 comprises a suction system, provided with a suction mouth 97 arranged facing the belts 42 and connected to a suction duct 99. In this case, the belts 42 comprise through-openings 43, holes, designed to attach the laminating sheet 100 by means of the suction air flow.

According to other embodiments, the alignment device 10 comprises an optical measurement system S1 able to detect the lateral position of both the laminating sheet 100 and the sheet, or web, of multilayer composite cardboard 110. The alignment device 10 also comprises a processing unit, for example an electronic board, connected to the optical measurement system S1 and to the actuator 150. The processing unit is configured to receive and process the data received from the optical measurement system S1 and to operate the actuator 150 depending on the processed data.

According to further embodiments, the optical measurement system S1 is positioned directly above the belts 42 of the second motorized transport unit B1.

According to a particularly advantageous characteristic feature, the inlet of the second motorized transport unit B1 is arranged at a distance from the outlet of the first transport unit B0 which is equivalent to the length of the laminating sheet to be joined and must therefore be able to vary depending on the format.

The alignment device 10 comprises an acceleration unit R2 arranged close to the second motorized transport unit B1. In the embodiment shown in the attached figures, the acceleration unit R2 is arranged above the motorized transport unit B1, and in particular in the end portion of the motorized transport unit B1 along the forward feeding path of the laminating sheets 100 in the forward feeding direction DR.

The acceleration unit R2 is configured to increase the transport speed of the laminating sheets 100 and may comprise a plurality of acceleration rollers 70 which are connected, by means of a shaft, to an independent actuator 78 for rotation about its axis of rotation. The acceleration unit R2 may also comprise a plurality of pressure wheels 72 arranged vertically above the acceleration rollers 70 and distributed transversely with respect to the axis defined by the forward feeding direction DR.

In other embodiments, the acceleration unit R1 comprises a single acceleration roller connected to an independent actuator.

The acceleration unit R2 also comprises an actuator 76 connected directly to the pressure wheels 72 and configured to displace the pressure wheels 72, during use, from an operating position in which the pressure wheels 72 are in contact with the laminating sheet 100, imparting a thrust thereto, to a rest position in which the pressure wheels 72 are not in contact with the laminating sheet 100.

According to one of the embodiments of the present invention shown in Figures 9a, 9b and 9c, the alignment device 10 comprises an actuator 150 connected to the second motorized transport unit B1 configured to move, during use, the motorized transport unit B1, and therefore the belts 42, transversely with respect to the longitudinal axis coinciding with the forward feeding direction DR of the laminating sheet. According to a particularly advantageous feature, the actuator may be an electric jack 150 fixed to a support structure 152 of the alignment device 10. As will emerge more clearly below, the electric jack 150 is especially designed to move rapidly, frequently and in a very precise manner the second motorized transport unit B1 and therefore the belts 42. Obviously, it is possible to envisage different types of actuators 150 such as an actuator operated by a servomotor or an electric piston, or any other actuator of the known type, provided that it is possible to move rapidly, frequently and very precisely the second motorized transport unit B1.

According to the embodiment shown, the second motorized transport unit B1 may be mounted on a secondary structure attached to a main structure, by means of one or more guides which allow the aforementioned transverse displacement of the second motorized transport unit B1 with respect to the longitudinal axis coinciding with the forward feeding direction DR of the laminating sheet.

The corrugated cardboard laminator also comprises a laminating unit R3 for joining the laminating sheet to a sheet, or web, of multilayer composite cardboard, arranged downstream of the second transport unit B1 along the forward feeding path of the laminating sheet 100 in the forward feeding direction DR.

In the embodiment shown in the figures, the laminating unit R3 comprises a pair of rollers 62, 64 arranged superimposed on each other and at least one independent actuator 61. Each of the rollers 62, 64 has an axis of rotation, and at least one of the two rollers, for example the roller 64 is connected to the actuator 61 so as to rotate about its axis of rotation and press between the two rollers 62, 64 a laminating sheet 100 and a sheet, or web, of multilayer composite cardboard 110 and help gluing together and transport thereof along the forward feeding direction DR. In the embodiment shown in Figure 3, the roller 64 is configured to be a return roller for a belt for moving a sheet, or web, of multilayer composite cardboard 110. In the embodiment shown in Figure 6, the roller 62 is also connected to an independent actuator 63.

According to other embodiments, the laminating unit R3 comprises a roller and a mat.

According to another embodiment, shown in Figure 10, the alignment device 10 according to the present invention comprises, along the forward feeding path of the laminating sheet 100 in the forward feeding direction DR:
- a first motorized transport unit B0 for transporting laminating sheets 100;
- a second motorized transport unit B1 for aligning the laminating sheet 100, arranged downstream of the first motorized transport unit B0;
- an acceleration unit R2 arranged close to the second motorized transport unit B1; and
- a laminating unit R3 for joining the laminating sheet to a sheet, or web, of multilayer composite cardboard, arranged downstream of the second transport unit B1.

The technical characteristics of the motorized transport unit B0, B1, the acceleration unit R2 and the laminating unit R3 are the same as those described above and will therefore not be repeated for the sake of brevity, but are incorporated by reference.

According to these embodiments, the alignment device 10 comprises a separate second acceleration unit R1 arranged between the first motorized transport unit B0 and the second motorized transport unit B1, along the forward feeding path of the laminating sheet 100 in the longitudinal forward feeding direction DR. The second acceleration unit R1 is configured to increase the transport speed of the laminating sheets 100 from the first motorized transport unit B0 to the second motorized transport unit B1.

The second acceleration unit R1 comprises a plurality of acceleration wheels 32 and an independent actuator 31. The acceleration wheels 32 may be engaged with a shaft 33 which has an axis of rotation and is connected to the actuator 31 so as to rotate about its axis of rotation and move the acceleration wheels 32.

In other embodiments, the second acceleration unit R1 comprises a single acceleration roller connected to an independent actuator.

According to a further embodiment of the present invention, the second acceleration unit R1 also comprises a pressure system, for example a plurality of pressure roller wheels 34, arranged superimposed on the acceleration wheels, or the roller, and configured to increase the friction exerted by the acceleration wheels 32 on the laminating sheet 100. According to these embodiments, the second acceleration unit R1 also comprises an actuator 35 connected to the pressure roller wheels 34 so as to move them, during use, from an operative position in which the pressure roller wheels 34 are in contact with the laminating sheet 100, favouring the thrust provided by the acceleration wheels 32, into a rest position in which the pressure roller wheels 34 are not in contact with the laminating sheet 100.

According to other embodiments, the alignment device 10 comprises, along the forward feeding path of the laminating sheet 100 in the forward feeding direction DR:
- a first motorized transport unit B0 for transporting laminating sheets 100;
- a second acceleration unit R1 arranged between the first motorized transport unit B0 and the second motorized transport unit B1;
- a second motorized transport unit B1 for aligning the laminating sheet 100, arranged downstream of the first motorized transport unit B0;
- a first acceleration unit R2 arranged close to the second motorized transport unit B1; and
- a laminating unit R3 for joining the laminating sheet to a sheet, or web, of multilayer composite cardboard, arranged downstream of the second transport unit B1.

The technical characteristics of the motorized transport unit B0, B1, the acceleration units R1, R2 and the laminating unit R3 are the same as those described above and will therefore not be repeated for the sake of brevity, but are incorporated by reference.

According to these embodiments, the alignment device 10 comprises a third transport unit B2 for aligning the laminating sheet 100 arranged between the motorized transport unt B1 and the laminating unit R3 along the forward feeding path of the laminating sheet 100 in the forward feeding direction DR.

With particular reference to Figures 11 and 12, the third transport unit B2 comprises at least one pair of belts 52, a pair of shafts 55 on which the belts 52 are mounted, and an independent actuator 51. Each of the shafts 55 has an axis of rotation, and at least one of the shafts 55 is connected to the actuator 51 so as to rotate about its axis of rotation and move the at least one pair of belts 52 and allow transport of a laminating sheet 100 along a forward feeding direction DR. Each belt 52 has a predetermined perimetral development lengthwise and a width such that the sum of the widths of the belts 52 allows the formation of a sliding/transport plane of the laminating sheet 100. The at least one pair of belts 52 is arranged longitudinally staggered with respect to the pair of belts 42 of the second motorized transport unit B1.

The third motorized transport unit B2 comprises five belts 52 mounted on the shaft 55 and on the shaft 45 of the second motorized transport unit B1. The belts 52 are arranged distributed uniformly along the length of the shafts 45, 55 and longitudinally staggered with respect to the belts 42 of the second motorized transport unit B1.

In other embodiments, the number, the width and the distribution of the belts 52 may vary greatly from that shown in Figure 12, provided that the belts 42 are able to form a sliding/transport plane of the laminating sheet 100. For example, it is possible to envisage a number of belts 52 equal to or greater than the number of belts 42 of the second motorized transport unit B1.

According to another embodiment, shown in Figure 13, the alignment device 10 comprises, along the forward feeding path of the laminating sheet 100 in the forward feeding direction DR:
- a first motorized transport unit B0 for transporting laminating sheets 100;
- a second motorized transport unit B1 for aligning the laminating sheet 100, arranged downstream of the first motorized transport unit B0;
- an acceleration unit R2 arranged close to the second motorized transport unit B1;
- a third transport unit B2 for aligning the laminating sheet 100, arranged between the motorized transport unit B1 and the laminating unit R3; and
- a laminating unit R3 for joining the laminating sheet to a sheet, or web, of multilayer composite cardboard, arranged downstream of the third transport unit B2.

The technical characteristics of the motorized transport units B0, B1, B2, the acceleration unit R2 and the laminating unit R3 are the same as those described above and will therefore not be repeated for the sake of brevity, but are incorporated by reference.

The present invention also comprises a method for aligning a laminating sheet in a corrugated carboard laminator.

A corrugated cardboard laminator according to the present invention comprises a laminating sheet magazine 1, or sheet feeder, a transport zone 2 for transporting the laminating sheets in a forward feeding direction DR, an inlet 5 for a web of multilayer composite cardboard moved along a longitudinal direction DR2, an alignment device 10 for aligning laminating sheets 100, and a laminating unit R3 for joining the laminating sheet 100 to a sheet of multilayer composite cardboard 110.

In the embodiment shown in Figure 14, the corrugated cardboard laminator may also comprise a discarding unit 219, a longitudinal cutting or trimming unit 220, a vinyl gluing unit 230 and a transverse cutting unit 240.

The method of aligning a laminating sheet according to the present invention comprises a first step involving feeding with a first predetermined feeding speed V₀ a laminating sheet 100 from a laminating sheet magazine 1 to a motorized transport unit B1 along a forward feeding path of the laminating sheet 100 in a forward feeding direction DR.

In particular, a laminating sheet 100 stored in the laminating sheet magazine 1 is removed and transported as far as the first motorized transport unit B0 and deposited on the belt 22. The pair of shafts 24, 25 is rotated by the actuator so that the belt 22 is moved with a first predetermined speed V₀. In this way, the laminating sheet 100 is made to advance by means of the belt 22 with said first predetermined speed V₀ in the forward feeding direction DR.

The method comprises a second step involving feeding the laminating sheet 100 against at least one movable abutting element 46, 46' engaged with the motorized transport unit B1 and arranged on the sliding/transport plane, wherein said movable abutting element 46, 46' moves at a predetermined movement speed V₁ The value of the movement speed V1₁ is less than the value of the first feeding speed V₀.

In particular, the pair of shafts 44, 45 on which the at least one pair of belts 42 is mounted is rotated by the independent actuator 41, so that the at least one pair of belts 42 and each movable abutting element 46, 46' engaged with a respective belt 42 are moved with a second predetermined movement speed V₁. During this step, the laminating sheet 100 continues to advance at the first predetermined feeding speed V₀.

Since the value of the feeding speed V₀ with which the laminating sheet 100 is transported is greater than the value of the movement speed V₁ of the movable abutting element 46, 46', the laminating sheet 100 is brought up against each movable abutting element 46, 46'.

This configuration prevents undesirable rotations of the laminating sheet 10 during its movement along the forward feeding path in the forward feeding direction DR, which would result in incorrect alignment of the laminating sheet 100 with the sheet, or web, of multilayer composite cardboard 110. In particular, the front edge 101 of the laminating sheet 100 will be brought into alignment with the alignment axis A-A, A'-A' defined by the longitudinally elongated walls of the movable abutting elements 46, 46' and therefore with the axis defined by a front edge 111 of the sheet, or web, of multilayer composite cardboard 110.

The second motorized transport unit B1 is actuated and controlled so as to ensure a predetermined synchronism with the remaining transport units and with the transport of the laminating sheets 100. For example, when a laminating sheet 100 reaches the second motorized transport unit B1, one of the two movable abutting elements 46, 46' arranged on each belt 42, is located facing the front edge 101 of the laminating sheet 100. Furthermore, the speed of rotation of the shaft 44, and therefore the speed V₁ of the belts must be such that half a revolution of each belt 42 is performed in synchronism with the arrival of a new laminating sheet 100.

The method comprises a third step involving feeding with a second predetermined feeding speed V₂ the laminating sheet 100 from the motorized transport unit B1 to a laminating unit R3 for joining the laminating sheet 100 to a multilayer composite cardboard sheet 110. The value of the speed V₂ is greater than the value of the speed V₁ and the value of the speed V₀ and corresponds to the value of a forward feeding speed V_{c} of the sheet, or a web, of multilayer composite cardboard 110. The sheet is fed to the laminating unit R3 by the acceleration unit R2.

In particular, the acceleration roller 70 of the acceleration unit R2 is rotated by the independent actuator 78 at a second predetermined forward feeding speed V₂ and the pressure wheels 72 are displaced into an operative position in contact with the laminating sheet 100.

At this point, the laminating sheet 100 is moved by the acceleration roller 70 and by the pressure wheels 72 at the third predetermined speed V₂, leaving the motorized transport unit B1 until it reaches, along the forward feeding path in the forward feeding direction DR, the laminating unit R3 configured to join the laminating sheet 100 to the multilayer composite cardboard sheet 110.

Subsequently, the sheet, or web, of multilayer composite cardboard 110, moved at the forward feeding speed V_{c}, the value of which corresponds to the value of the second movement speed V₂, is joined together with the previously aligned laminating sheet 100 in order to form a laminated corrugated cardboard.

According to further embodiments, the method according to the present invention, after the second step described above, i.e. when the laminating sheet 100 is located on the second motorized transport unit B1, comprises a step in which the second motorized transport unit B1 is displaced transversely with respect to the longitudinal axis coinciding with the forward feeding direction DR from a first, initial, position, into a second position in which the side edge 103 of the laminating sheet 100 is aligned with the side edge 113 of the sheet, or web, of multilayer composite cardboard 110 which in the meantime is passing underneath the alignment device 10 with a predetermined speed.

Once the laminating sheet leaves the second motorized transport unit B1, the second motorized transport unit B1 is moved again into the initial position in order to receive the next laminating sheet 100.

According to further embodiments, before moving the second motorized transport unit B1, the optical measurement system S1 detects the position of a side edge 113 of the sheet, or web, of multilayer composite cardboard 110 and the position of a side edge 103 of the laminating sheet 100, so as to quantify the necessary transverse displacement of the second motorized transport unit B1 so that the laminating sheet 100 is laterally aligned with the sheet, or web, of multilayer composite cardboard 110. According to other embodiments, the optical measurement system S1, when positioned directly above the belts 42, provides direct feedback about the position of the edge also during the displacement of the second motorized transport unit B1. Some embodiments comprise a step in which the laminating sheet 100 is attached to the belts 42 of the second motorized transports unit B1 after the front edge 101 of the laminating sheet 100 is aligned with the alignment axis A-A defined by the longitudinally elongated walls of the movable abutting elements 46, 46'. This step is particularly useful in the embodiments in which the second motorized transport unit B1 is displaced transversely with respect to the longitudinal axis coinciding with the forward feeding direction DR so as to allow the alignment of the side edge 103 of the laminating sheet 100 with the side edge 113 of the sheet, or web, of multilayer composite cardboard 110. By attaching the laminating sheet 100 to the belts 42 undesirable movements, and therefore misalignment, of the laminating sheet 100 due to the displacement of the second motorized transport unit B1 are prevented.

In particular, once the front edge 101 of the laminating sheet 100 is aligned with the alignment axis A-A defined by the longitudinally elongated walls of the movable abutting elements 46, 46', the suction system is activated, and the air sucked through the suction duct 99 and the through-openings 43 formed on the belts 42 allows the laminating sheet 100 to be attached to the belts 42. Once the laminating sheet 100 reaches the acceleration unit R2, the first group of movable abutting elements 46 moves below the sliding/transport plane of the laminating sheet 100, and the front edge 101 of the laminating sheet 100 is engaged by the pair of rollers 62,64, the suction system is deactivated to allow feeding of the laminating sheet by the acceleration unit R2 to the laminating unit R3.

The method for aligning a laminating sheet according to the present invention may also be realized on the different embodiments of the alignment device described above.

In the embodiment comprising a separate second acceleration unit R1 arranged between the first motorized transport unit B0 and the second motorized transport unit B1, the laminating sheet 100 is in any case fed by the second acceleration unit R1 at a speed, the value of which is greater than the value of the second predetermined speed V₁. at which the belt 42, and therefore the at least one movable abutting element 46, 46', is moved. The second acceleration unit may simply favour the movement of the laminating sheet 100 from the first motorized transport unit B0 to the second motorized transport unit B1. The fact that the value of the speed set by the second acceleration unit R1 may be greater than or less than the first predetermined speed V₀ set by the first motorized transport unit B0 is absolutely irrelevant for the purposes of the present invention.

Similarly, in the embodiment of the alignment device comprising a third transport unit B2 arranged between the second motorized transport unit B1 and the laminating unit R3, the laminating sheet 100 is in any case fed by the third acceleration unit B2 at a speed, the value of which is greater than the value of the second predetermined speed V₁. at which the belt 42, and therefore the at least one movable abutting element 46, 46', is moved.

## Claims

1. An alignment device for aligning laminating sheets in a corrugated cardboard laminator, comprising one after the other along a transport path of laminating sheets (100) in a forward feeding direction (DR):
- a first transport unit (B0) configured to transport laminating sheets (100) at a transport speed,
- an acceleration roller (R2) configured to increase the transport speed of the laminating sheets (100),
- a second transport unit (B1),
**characterized in that**
said second transport unit (B1) comprises at least one movable abutting element (46) arranged transverse to said forward feeding direction (DR) of the laminating sheet and configured to align the laminating sheets (100).

2. Alignment device according to claim 1, **characterized in that** said second transport (B1) comprises at least one pair of belts (42), a pair of shafts (44, 45) on which the at least one pair of belts (42) is mounted, the second transport unit (B1) comprising at least one movable abutting element (46) engaged with each of the belts (42).

3. Alignment device according to any one of the preceding claims, **characterized in that** each belt (42) has a perimetral development of predetermined length and predetermined width such that the sum of the widths of the belts (42) forms a sliding/transport plane of the laminating sheet (100).

4. Alignment device according to claim 2, **characterized in that** each movable abutting element (46) comprises at least one abutting wall (47) elongated in a longitudinal direction, the plurality of longitudinally elongated walls (47) defining an alignment plane of a laminating sheet (100), orthogonal to the sliding/transport plane of the laminating sheet (100) when the abutting elements (46) are aligned with each other along a longitudinal axis (A-A).

5. Alignment device according to any one of the preceding claims, **characterized in that** the second transport unit (B1) comprises at least one second movable abutting element (46') arranged transverse to said forward feeding direction (DR) of the laminating sheet (100) and configured to align the laminating sheets (100).

6. Alignment device according to any one of the preceding claims, **characterized in that** the acceleration unit (R2) comprises at least one acceleration roller (70), connected to an independent actuator (78) for rotation about its own axis of rotation, and is configured to increase the transport speed of the laminating sheets (100).

7. Alignment device according to claim 6, **characterized in that** the acceleration unit (R2) further comprises a plurality of vertically arranged pressure wheels (72) vertically superimposed over the acceleration rollers (70), and distributed transversely with respect to the axis defined by the forward feeding direction (DR).

8. Alignment device according to any one of the preceding claims, **characterized in that** it comprises an actuator (150) connected to the second transport unit (B1) and configured to move the second transport unit (B1) transversely with respect to the longitudinal axis coinciding with the forward feeding direction (DR) of the laminating sheet (100).

9. A method of aligning a laminating sheet with a multilayer composite cardboard sheet in a corrugated cardboard laminator comprises the following steps:
(a) feeding with a predetermined first feeding speed (V₀) a laminating sheet (100) from a laminating sheet magazine (1) to a transport unit (B1) on a sliding/transport plane along a transport path of the laminating sheet (100) in a forward feeding direction (DR);
(b) feeding with a second predetermined feeding speed (V₂) the laminating sheet (100) from the transport unit (B1) to a laminating unit (R3) configured to join the laminating sheet (100) to a multilayer composite cardboard sheet (110);
**characterized in that**, between step (a) and step (b), it comprises a step of:
(c) feeding the laminating sheet (100) against at least one movable abutting element (46, 46') engaged with the transport unit (B1) and arranged on the sliding/transport plane, wherein said movable abutting element (46, 46') moves at a predetermined movement speed (V₁);
the value of the movement speed (V₁) being less than the values of the first (V₀) and second (V₂) feeding speeds.

10. Method according to claim 9, **characterized in that**, between step (c) and step (b), it comprises a step of:
(d) moving the transport unit (B1) transversely with respect to the longitudinal axis coinciding with the forward feeding direction (DR) from a first, initial, position to a second position in which a side edge (103) of the laminating sheet (100) is aligned with a side edge (113) of a sheet, or web, of multilayer composite cardboard (110).

## Patentansprüche

1. Ausrichtvorrichtung zum Ausrichten von Kaschierbögen in einer Wellpappen-Kaschiermaschine, umfassend entlang eines Transportwegs für Kaschierbögen (100) in einer Vorwärtsförderrichtung (DR) nacheinander angeordnet:
- eine erste Transporteinheit (B0), die dazu eingerichtet ist, Kaschierbögen (100) mit einer Transportgeschwindigkeit zu transportieren,
- eine Beschleunigungswalze (R2), die dazu eingerichtet ist, die Transportgeschwindigkeit der Kaschierbögen (100) zu erhöhen,
- eine zweite Transporteinheit (B1),
**dadurch gekennzeichnet, dass**
die zweite Transporteinheit (B1) mindestens ein bewegliches Anschlagelement (46) umfasst, das quer zur Vorschubrichtung (DR) des Kaschierbogens angeordnet und dazu eingerichtet ist, die Kaschierbögen (100) auszurichten.

2. Ausrichtvorrichtung nach Anspruch 1, **dadurch gekennzeichnet, dass** die zweite Transporteinheit (B1) mindestens ein Paar Riemen (42) sowie ein Paar Wellen (44, 45) umfasst, auf denen das mindestens eine Paar Riemen (42) angebracht ist, wobei die zweite Transporteinheit (B1) mindestens ein bewegliches Anschlagelement (46) aufweist, das mit jedem der Riemen (42) in Eingriff steht.

3. Ausrichtvorrichtung nach einem der vorhergehenden Ansprüche, **dadurch gekennzeichnet, dass** jeder Riemen (42) einen Umfang mit einer vorbestimmten Länge und einer vorbestimmten Breite aufweist, derart, dass die Summe der Breiten der Riemen (42) eine Gleit-/Transportebene des Kaschierbogens (100) bildet.

4. Ausrichtvorrichtung nach Anspruch 2, **dadurch gekennzeichnet, dass** jedes bewegliche Anschlagelement (46) mindestens eine in Längsrichtung langgestreckte Anschlagwand (47) aufweist, wobei die mehreren in Längsrichtung langgestreckten Wände (47) eine Ausrichtebene für einen Kaschierbogen (100) definieren, die orthogonal zu der Gleit-/Transportebene des Kaschierbogens (100) verläuft, wenn die Anschlagelemente (46) entlang einer Längsachse (A-A) zueinander ausgerichtet sind.

5. Ausrichtvorrichtung nach einem der vorhergehenden Ansprüche, **dadurch gekennzeichnet, dass** die zweite Transporteinheit (B1) mindestens ein zweites bewegliches Anschlagelement (46') umfasst, das quer zur Vorschubrichtung (DR) des Kaschierbogens (100) angeordnet und dazu eingerichtet ist, die Kaschierbögen (100) auszurichten.

6. Ausrichtvorrichtung nach einem der vorhergehenden Ansprüche, **dadurch gekennzeichnet, dass** die Beschleunigungseinheit (R2) mindestens eine Beschleunigungsrolle (70) umfasst, die mit einem unabhängigen Aktuator (78) zur Drehung um ihre eigene Drehachse verbunden ist und dazu eingerichtet ist, die Transportgeschwindigkeit der Kaschierbögen (100) zu erhöhen.

7. Ausrichtvorrichtung nach Anspruch 6, **dadurch gekennzeichnet, dass** die Beschleunigungseinheit (R2) ferner eine Mehrzahl von vertikal angeordneten Andruckrädern (72) umfasst, die vertikal über den Beschleunigungsrollen (70) liegen und quer zu der durch die Vorschubrichtung (DR) definierten Achse verteilt sind.

8. Ausrichtvorrichtung nach einem der vorhergehenden Ansprüche, **dadurch gekennzeichnet, dass** sie einen mit der zweiten Transporteinheit (B1) verbundenen Aktor (150) umfasst, der dazu eingerichtet ist, die zweite Transporteinheit (B1) quer zu der Längsachse zu bewegen, welche mit der Vorwärtsförderrichtung (DR) des Kaschierbogens (100) zusammenfällt.

9. Verfahren zum Ausrichten eines Kaschierbogens zu einem mehrschichtigen Verbundkartonbogen in einer Wellpappen-Kaschiermaschine umfasst die folgenden Schritte:
(a) Zuführen eines Kaschierbogens (100) mit einer vorbestimmten ersten Zuführgeschwindigkeit (V₀) aus einem Kaschierbogenmagazin (1) zu einer Transporteinheit (B1) auf einer Gleit-/Transportebene entlang eines Transportwegs des Kaschierbogens (100) in einer Vorwärts-Zuführrichtung (DR);
(b) Zuführen des Kaschierbogens (100) mit einer zweiten vorbestimmten Zuführgeschwindigkeit (V₂) von der Transporteinheit (B1) zu einer Kaschiereinheit (R3), die dazu eingerichtet ist, den Kaschierbogen (100) mit einem mehrschichtigen Verbundkartonbogen (110) zu verbinden;
**dadurch gekennzeichnet, dass** das Verfahren zwischen Schritt (a) und Schritt (b) folgenden Schritt umfasst:
(c) Zuführen des Kaschierbogens (100) gegen mindestens ein bewegliches Anschlagelement (46, 46'), das mit der Transporteinheit (B1) in Wirkverbindung steht und auf der Gleit-/Transportebene angeordnet ist, wobei sich das bewegliche Anschlagelement (46, 46') mit einer vorbestimmten Bewegungsgeschwindigkeit (V₁) bewegt;
wobei der Wert der Bewegungsgeschwindigkeit (V₁) geringer ist als die Werte der ersten (V₀) und der zweiten (V₂) Zuführgeschwindigkeit.

10. Verfahren nach Anspruch 9, **dadurch gekennzeichnet, dass** es zwischen Schritt (c) und Schritt (b) einen folgenden Schritt umfasst:
(d) Bewegen der Transporteinheit (B1) quer zur Längsachse, die mit der Vorwärtsvorschubrichtung (DR) zusammenfällt, von einer ersten Ausgangsposition in eine zweite Position, in der eine Seitenkante (103) des Kaschierbogens (100) mit einer Seitenkante (113) eines Bogens oder einer Bahn aus mehrschichtigem Verbundkartonbogen (110) ausgerichtet ist.

## Revendications

1. Dispositif d'alignement permettant d'aligner des feuilles de laminage dans une lamineuse de carton ondulé, comprenant l'un après l'autre le long d'un parcours de transport de feuilles de laminage (100) dans une direction d'acheminement vers l'avant (DR) :
- une première unité de transport (B0) conçue pour transporter des feuilles de laminage (100) à une certaine vitesse de transport,
- un rouleau d'accélération (R2) conçu pour augmenter la vitesse de transport des feuilles de laminage (100),
- une seconde unité de transport (B1),
**caractérisé en ce que**
ladite seconde unité de transport (B1) comprend au moins un élément de butée mobile (46) agencé transversalement par rapport à ladite direction d'acheminement vers l'avant (DR) de la feuille de laminage et conçu pour aligner les feuilles de laminage (100).

2. Dispositif d'alignement selon la revendication 1, **caractérisé en ce que** ladite seconde unité de transport (B1) comprend au moins une paire de courroies (42), une paire d'arbres (44, 45) sur lesquels l'au moins une paire de courroies (42) est montée, la seconde unité de transport (B1) comprenant au moins un élément de butée mobile (46) mis en prise avec chacune des courroies (42).

3. Dispositif d'alignement selon l'une quelconque des revendications précédentes, **caractérisé en ce que** chaque courroie (42) a un développement périmétral de longueur prédéterminée et de largeur prédéterminée de telle sorte que la somme des largeurs des courroies (42) forme un plan de glissement/transport de la feuille de laminage (100).

4. Dispositif d'alignement selon la revendication 2, **caractérisé en ce que** chaque élément de butée mobile (46) comprend au moins une paroi de butée (47) allongée dans une direction longitudinale, la pluralité de parois allongées longitudinalement (47) définissant un plan d'alignement d'une feuille de laminage (100), orthogonal au plan de glissement/transport de la feuille de laminage (100) lorsque les éléments de butée (46) sont alignés les uns par rapport aux autres le long d'un axe longitudinal (A-A).

5. Dispositif d'alignement selon l'une quelconque des revendications précédentes, **caractérisé en ce que** la seconde unité de transport (B1) comprend au moins un second élément de butée mobile (46') agencé transversalement par rapport à ladite direction d'acheminement vers l'avant (DR) de la feuille de laminage (100) et conçu pour aligner les feuilles de laminage (100).

6. Dispositif d'alignement selon l'une quelconque des revendications précédentes, **caractérisé en ce que** l'unité d'accélération (R2) comprend au moins un rouleau d'accélération (70), relié à un actionneur indépendant (78) permettant une rotation autour de son propre axe de rotation, et est conçue pour augmenter la vitesse de transport des feuilles de laminage (100).

7. Dispositif d'alignement selon la revendication 6, **caractérisé en ce que** l'unité d'accélération (R2) comprend en outre une pluralité de roues de pression (72) agencées verticalement, superposées verticalement aux rouleaux d'accélération (70) et réparties transversalement par rapport à l'axe défini par la direction d'acheminement vers l'avant (DR).

8. Dispositif d'alignement selon l'une quelconque des revendications précédentes, **caractérisé en ce qu'**il comprend un actionneur (150) relié à la seconde unité de transport (B1) et conçu pour déplacer la seconde unité de transport (B1) transversalement par rapport à l'axe longitudinal coïncidant avec la direction d'acheminement vers l'avant (DR) de la feuille de laminage (100).

9. Procédé d'alignement d'une feuille de laminage avec une feuille de carton composite multicouche dans une lamineuse de carton ondulé comprenant les étapes suivantes :
(a) l'acheminement, à une première vitesse d'acheminement prédéterminée (V₀), d'une feuille de laminage (100) depuis un magasin de feuilles de laminage (1) vers une unité de transport (B1) sur un plan de glissement/transport le long d'un parcours de transport de la feuille de laminage (100) dans une direction d'acheminement vers l'avant (DR) ;
(b) l'acheminement, à une seconde vitesse d'acheminement prédéterminée (V₂), de la feuille de laminage (100) depuis l'unité de transport (B1) vers une unité de laminage (R3) conçue pour assembler la feuille de laminage (100) à une feuille de carton composite multicouche (110) ;
**caractérisé en ce que**, entre l'étape (a) et l'étape (b), il comprend une étape consistant à :
(c) acheminer la feuille de laminage (100) contre au moins un élément de butée mobile (46, 46') mis en prise avec l'unité de transport (B1) et agencé sur le plan de glissement/transport, dans lequel ledit élément de butée mobile (46, 46') se déplace à une vitesse de déplacement prédéterminée (V₁) ;
la valeur de la vitesse de déplacement (V₁) étant inférieure aux valeurs des première (V₀) et seconde (V₂) vitesses d'acheminement.

10. Procédé selon la revendication 9, **caractérisé en ce que**, entre l'étape (c) et l'étape (b), il comprend une étape consistant à :
(d) déplacer l'unité de transport (B1) transversalement par rapport à l'axe longitudinal coïncidant avec la direction d'acheminement vers l'avant (DR) depuis une première position initiale vers une seconde position dans laquelle un bord latéral (103) de la feuille de laminage (100) est aligné avec un bord latéral (113) d'une feuille, ou bande, de carton composite multicouche (110).
